# EUROPÄISCHE PATENTANMELDUNG

(11) **EP 1 758 055 A1**
(43) Veröffentlichungstag der Anmeldung: **28.02.2007**
(21) Anmeldenummer: 05018420.9
(22) Anmeldetag: 24.08.2005
(51) Int. Cl.: G06Q 30/00

(54) **Datenverarbeitungsverfahren**

(71) Anmelder: UBS AG, 8001 Zürich (CH)
(72) Erfinder: Amstad, Kurt, 5607 Hägglingen (CH)
(74) Vertreter: Jehle, Volker Armin

(57) **Zusammenfassung**

Die Erfindung betrifft ein Datenverarbeitungsverfahren zur zeitlich optimierten Berechnung und Verrechnung von Preisen für eine erbrachte Leistung, die für einen Kunden von einem Unternehmen erbracht wurde.

Dazu wird der Preis nach einem Preismodell mit mindestens den folgenden Verarbeitungsschritten berechnet und verrechnet:
(1) Berechnen des Preises für die jeweilige erbrachte Leistung anhand des für den Kunden gültigen Preismodells;
(2) Speichern des berechneten Preises;
(3) Prüfen anhand des Preismodells, ob die zu diesem Geschäftsfall erbrachte Leistung dem Konto des Kunden sofort bei Ausführung des Geschäfts oder zu einem zukünftigen Zeitpunkt mit Wertstellung zu verrechnen ist;
(4) sofortiges Verrechnen mit Wertstellung des berechneten Preises auf dem Konto des Kunden, falls der zu dem Geschäftsfall ermittelte Preis mit sofortiger Wertstellung bei Ausführung des Geschäfts zu verrechnen ist.

## Beschreibung

Die Erfindung betrifft ein Datenverarbeitungsverfahren zur zeitlich optimierten Berechnung und Verrechnung eines Preises für eine erbrachte Leistung, die von einem Unternehmen für einen Kunden erbracht wurde.

Es ist bekannt, dass dem Kunden eines Unternehmens, insbesondere eines Dienstleistungsunternehmens, für die in Anspruch genommenen Leistungen und Dienstleistungen Preise in Rechnung gestellt werden. Die Höhe der in Rechnung gestellten Preise hängt dabei zum Beispiel von der Art der in Anspruch genommenen Leistungen oder Dienstleistungen, von der Menge sowie von verschiedenen anderen Faktoren ab.

So werden auch bei Großbanken für die verschiedenen von Kunden und Endkunden in Anspruch genommenen Dienstleistungen Gebühren berechnet und auf dem Konto des Kunden bzw. Endkunden mit Wertstellung verbucht. Bevor ein Preis dem Kunden in Rechnung gestellt wird, ist dieser der Höhe nach zu berechnen. Beispielsweise kann einem Bankkunden für das Ausführen einer Überweisung eines Geldbetrages von einem Konto auf ein anderes Konto ein Preis berechnet werden. Bei der Berechnung der Höhe des Preises kann beispielsweise berücksichtigt werden, ob die Überweisung zu einer anderen Bank oder ins Ausland erfolgte oder ob der Kunde eine besondere Vereinbarung hinsichtlich der Preise für Überweisungen mit der Bank vereinbart hat. So kann beispielsweise für diesen Kunden individuell oder für die entsprechende Kundengruppe vereinbart sein, dass hierfür eine bestimmte Anzahl von Überweisungen kostenfrei ist. Für andere Leistungen einer Bank, beispielsweise für die Bereitstellung einer Kreditkarte, kann beispielsweise eine feststehende Summe berechnet werden.

Mit der Berechnung des Preises wird dieser nur der Höhe nach bestimmt. Die Verrechnung des Preises mit dem Konto, also die Buchung des Preises mit Wertstellung (Valuta) auf dem zu belastenden Kundenkonto, findet für viele Geschäftsfälle üblicherweise zu einem späteren Zeitpunkt statt. Dieser spätere Zeitpunkt ist üblicherweise das Ende eines Zeitabschnitts, beispielsweise das Ende eines Kalendermonats, eines Quartals oder eines Kalenderjahres. Dabei ist zu beachten, dass zu diesem späteren Zeitpunkt regelmäßig ein hohes Aufkommen an solchen Be- und Verrechnungsvorgängen zu erwarten ist, da die Be- und Verrechnungen für eine Vielzahl von Konten am Ende eines solchen Zeitabschnitts durchzuführen ist.

Für eine Reihe von Geschäftsfällen ist jedoch vorgesehen, dass diese sofort der Höhe nach berechnet und mit Wertstellung auf dem Konto des Kunden verrechnet werden. Ein Beispiel hierfür ist die Maklercourtage beim Kauf von Aktien an einer Börse. Diese Maklercourtage wird häufig anteilig zu dem Wert der gekauften Aktien berechnet und sofort, das heißt im Rahmen der Abwicklung des Geschäfts, mit Wertstellung auf dem Konto des Kunden verrechnet.

Die Aufgabe der Erfindung besteht nun darin zum Einen ein optimiertes Verfahren zur Be- und Verrechnung der einem Kunden in Rechnung zu stellenden Preise vorzuschlagen, welches eine optimierte Ausnutzung der für derartige Be- und Verrechnungen verwendeten Rechner ermöglicht. Zum Anderen ist ein zu diesem Verfahren geeignetes Preismodell vorzuschlagen, welches es ermöglicht, eine Vielzahl von mit einem Kunden vereinbarten Konditionen für die Berechnung der Höhe der Preise und deren Verrechnung zu berücksichtigen.

Diese Aufgabe wird durch ein Datenverarbeitungsverfahren nach Anspruch 1 gelöst.

Der Be- und Verrechnung von Preisen ist dabei in einem Preismodell festgelegt, in welchem für jeden einzelnen Kunden die für diesen geltenden und mit diesem vereinbarten Konditionen festgelegt sind. Der Begriff der Berechnung eines Preises bezeichnet dabei die Ermittlung der Höhe des Preises, ohne dass der Preis auf dem Konto des Kunden mit Wertstellung verbucht wird. Der Begriff der Verrechnung eines Preises bezeichnet die Verbuchung eines der Höhe nach bereits vorher ermittelten Preises auf dem Konto des Kunden mit Wertstellung (Valuta).

In dem ersten Verfahrensschritt wird gleichzeitig mit der Ausführung der Leistung oder direkt im Anschluss daran ein Preis für die ausgeführte Leistung oder Dienstleistung berechnet. Die Berechnung des Preises findet dabei zunächst nur der Höhe nach statt, so dass zunächst nur die Höhe des Preises anhand des Preismodells bestimmt wird.

In einem nachfolgenden Verfahrensschritt wird anhand des für den Kunden anzuwendenden Preismodells ermittelt, ob der für die soeben ausgeführte Leistung berechnete Preis sofort, also unmittelbar im Anschluss an die Ausführung der Dienstleistung, mit dem Konto des Kunden mit Wertstellung zu verrechnen ist, oder ob die Verrechnung eines Preises mit Wertstellung auf dem Konto des Kunden nicht mit der Ausführung der Dienstleistung zeitlich zusammen fallen soll. Das Preismodell definiert also auch den Zeitpunkt, wann ein Preis für eine erbrachte Leistung mit Wertstellung zu verrechnen ist.

Falls in dem Preismodell definiert ist, dass der ermittelte Preis sofort zu verrechnen ist, so wird das Konto des Kunden dementsprechend sofort mit dem Preis belastet, so dass der Preis sofort verrechnet wird, also mit Wertstellung auf dem Konto des Kunden verbucht wird.

Anderenfalls, wenn also in dem Preismodell festgelegt ist, dass das Konto des Kunden mit einem Preis für die bereits erbrachte Leistung erst zu einem späteren Zeitpunkt mit Wertstellung zu belasten ist, so wird der ermittelte Preis zusammen mit den zur Durchführung der Leistung relevanten Daten gespeichert. Das Konto des Kunden wird nicht mit dem ermittelten Preis belastet, so dass das Unternehmen gegenüber dem Kunden mit der bereits erbrachten Leistung in Vorleistung tritt.

Für diese Leistungen, insbesondere Dienstleistungen, wird erst zu einem späteren Zeitpunkt ein Preis mit Wertstellung auf dem Konto des Kunden verrechnet. Zu diesem späteren Zeitpunkt wird der Preis dann erneut der Höhe nach berechnet und anschließend mit Wertstellung dem Konto des Kunden belastet.

Die hier relevanten Leistungen werden heute nahezu ausschließlich mit dem Einsatz von Datenverarbeitungsanlagen erbracht. Dabei entstehen die zu einem Geschäftsfall entstehenden Informationen als Daten, die mit einer solchen Datenverarbeitungsanlage weiter zu verarbeiten sind und die alle zu dem Geschäftsfall relevanten Informationen umfassen.

In dem vorgeschlagenen Verfahren zur Verarbeitung dieser Daten hinsichtlich der Preisbe- und Verrechnung ist die Verarbeitung zweigeteilt. In jedem Fall wird zum Zeitpunkt der Erbringung der Leistung, also der Abwicklung des Geschäfts, ein Preis entsprechend dem für diesen Kunden geltenden Preismodell der Höhe nach berechnet.

Unabhängig von dem Zeitpunkt der tatsächlichen Verrechnung des Preises auf dem Kundenkonto kann jedoch das Unternehmen, also insbesondere die Bank, zu jedem Zeitpunkt ermitteln, welche Preise noch zukünftig mit Wertstellung zu verrechnen sind und welche Einnahmen ihr damit vertraglich noch zustehen. Dabei ist darauf hinzuweisen, dass der berechnete Preis mit einem Preismodell der Ausprägung "Berechnung" berechnet und zum Zeitpunkt der tatsächlichen Verrechnung mit einem Preismodell der Ausprägung "Verrechnung" eventuell modifiziert und definitiv fixiert wird.

Weiterhin werden durch dieses Verfahren Buchungen und damit Rechenvorgänge vermieden, die aufgrund möglicherweise bestehender Konditionen mit einem Kunden ungültig oder falsch werden könnten. So ist beispielsweise eine mit dem Kunden vereinbarte Kondition denkbar, dass bei einer bestimmten Art von Geschäftsfällen der Preis für jede einzelne erbrachte Dienstleistung zu einem solchen Geschäftsfall geringer wird, falls eine vorbestimmte Anzahl dieser Geschäftsfälle in einer bestimmten Zeitspanne überschritten wird oder dass eine bestimmte Anzahl dieser Geschäftsfälle kostenfrei ist. Da die Gesamtanzahl der in einem Zeitabschnitt erbrachten Dienstleistungen zu einer Art von Geschäftsfällen erst nach oder zum Ablauf des Zeitabschnitts korrekt bestimmt werden kann, können Preise, für die eine mengenabhängige Preisregelung vereinbart ist, entsprechend erst am Ende des Zeitabschnitts definitiv fixiert werden.

Im Folgenden wird das erfindungsgemäße Verfahren anhand eines Ausführungsbeispiels für eine Bank und anhand von Figuren näher erläutert. Es zeigen:
- Fig. 1: ein vereinfachtes Ablaufdiagramm zur Be- und Verrechnung von Preisen
- Fig. 2: ein generisches Modell zur Preisbe- und Verrechnung
- Fig. 3: eine konkretere Ausführungsform des Preismodells
- Fig. 4: eine verfeinerte Ausführungsform des Preismodells
- Fig. 5: eine schematische Darstellung des Abwicklungsmodells

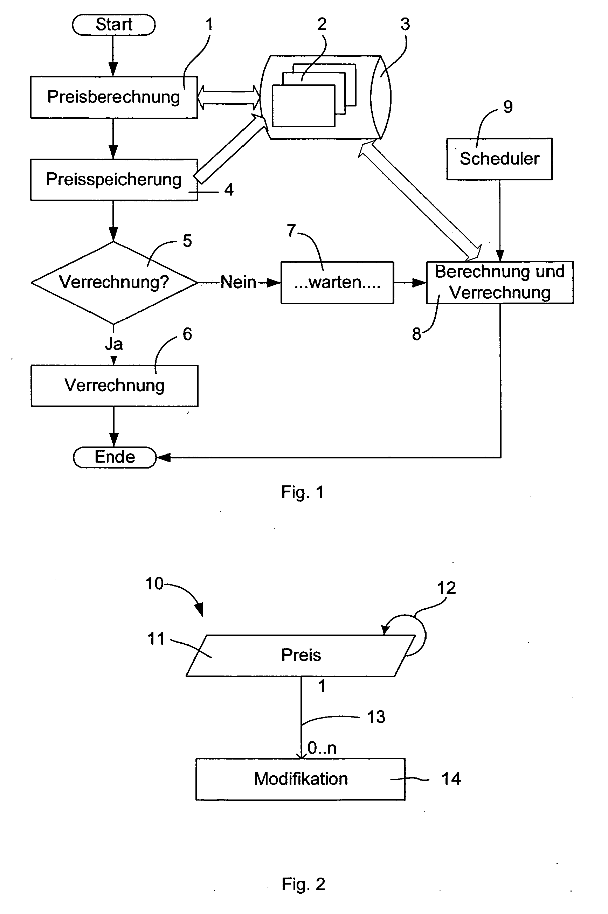

Das in Figur 1 dargestellte Ablaufdiagramm beginnt in dem ersten Verfahrensschritt 1 mit der Berechnung des Preises für eine Leistung, die die Bank erbracht hat. Üblicherweise handelt es sich hierbei um Dienstleistungen, für die der Bankkunde einen vertraglich vereinbarten Preis zu zahlen hat. Ein solcher Bankkunde kann dabei sowohl eine Privatperson als auch eine juristische Person oder eine andere Bank sein, die ein normales Konto für die Abwicklung des persönlichen oder des entsprechenden geschäftlichen Zahlungsverkehrs bei der leistungserbringenden Bank unterhält.

In Verfahrensschritt 1 wird die Höhe des Preises berechnet. Zu diesem Zeitpunkt ist die zugehörige Dienstleistung üblicherweise bereits erbracht. Die für die Berechnung der Preishöhe notwendigen Informationen sind dementsprechend verfügbar und liegen beispielsweise in Tabellen 2 einer angebundenen relationalen Datenbank 3 vor, auf die der den Preis berechnende Prozess, zugreifen kann. Diese Tabellen 2 sowie weitere für das Gesamtsystem notwendige Informationen, die ebenfalls in Datenbanktabellen gespeichert sind können Teil eines Repositorys sein. Ein Repository dient allgemein zur Datenhaltung der für das Preismodell gültigen Daten (Attribute, die in einem Preismodell für Regeln verwendet werden dürfen). Die Daten selbst können dabei in den Tabellen der Datenbank oder anderen geeigneten Organisationsformen gespeichert sein.

Weiterhin greift der den Preis berechnende Prozess auf preistreibende Attribute, z.B. Daten des Kunden, Product, Contract & Price zu, um die für diesen Kunden speziell vereinbarten Konditionen ermitteln zu können.

Sobald die Preisberechnung 1 stattgefunden hat, also der Preis für eine erbrachte Dienstleistung der Höhe nach ermittelt wurde, wird dieser zusammen mit anderen für die erbrachte Dienstleistung relevanten Daten gespeichert 4, beispielsweise ebenfalls wieder in einer Datenbanktabelle 2. In dieser Tabelle werden alle für bereits erbrachte Dienstleistungen berechneten Preise gespeichert, wobei diese unabhängig davon erfolgt, wann für eine Dienstleistung der ermittelte Preis mit Wertstellung auf dem Konto des Kunden zu verrechnen ist.

In einem nachfolgenden Verfahrensschritt 5 wird dann geprüft, ob der der Höhe nach berechnete Preis sofort, also schnellstmöglich im Anschluss an die Erbringung der Dienstleistung oder zu einem späteren Zeitpunkt mit Wertstellung auf dem Konto des Kunden zu verrechnen ist. Das Entscheidungskriterium, wann ein Preis zu verrechnen ist, also mit Wertstellung auf dem Konto des Kunden verbucht wird, hängt von der Art der Dienstleistung ab. Beispielsweise können beim Kauf von Aktien oder anderen Wertpapieren Preise oder Gebühren zu berechnen sein, die sofort auf dem Konto des Kunden mit Wertstellung zu verrechnen sind. Andere Dienstleistungen, wie beispielsweise Überweisungen von dem Konto des Kunden auf ein anderes Konto werden häufig erst in einem Buchungsabschluss am Ende eines Zeitabschnitts berücksichtigt, so dass erst dann ein Preis für die erbrachte Dienstleistung mit Wertstellung auf dem Konto des Kunden zu verrechnen ist

Falls für den Geschäftsfall, welcher der erbrachten Dienstleistung zugrunde liegt, in dem entsprechenden Preismodell konfiguriert ist, dass der Preis sofort mit Wertstellung auf dem Kundenkonto zu verrechnen ist, so findet die Verrechnung 6 des gerade berechneten Preises auf dem Kundenkonto mit Wertstellung sofort statt. In diesem Fall wird das Konto des Kunden mit dem Preis für die erbrachte Dienstleistung im Zuge der Erbringung der Dienstleistung, also im Zuge der Abwicklung des Geschäftsfalles, belastet und der Bank wird die dementsprechende Summe auf einem Gegenkonto gutgeschrieben.

Falls jedoch ein Preis für den der Dienstleistung zugrunde liegenden Geschäftsfall nicht zeitgleich mit der Erbringung der Dienstleistung auf dem Konto des Kunden mit Wertstellung zu verrechnen ist, so wird der bereits ermittelte Preis in keiner Form, also auch nicht ohne Wertstellung, auf das Konto des Kunden gebucht. Der berechnete Preis bleibt somit nur in der Tabelle 2 gespeichert, in die der Preis im ersten Verfahrensschritt und damit im Rahmen der Preisberechnung gespeichert wurde. Dem Bankkunden wird der so nur berechnete Preis, der nicht mit Wertstellung auf dem Kundenkonto verrechnet wurde, auch nicht angezeigt.

In diesem Fall ist abzuwarten, bis die Verrechnung 8 eines Preises für die bereits in der Vergangenheit erbrachte Dienstleistung angestoßen wird. Dies kann beispielsweise im Rahmen eines Kontoabschlusses stattfinden, bei dem für einen bestimmten Zeitpunkt der Kontostand errechnet wird, ohne dass noch Forderungen der Bank offen sind.

Zu dem späteren Zeitpunkt, an dem die Verrechnung 8 eines Preises für eine bereits erbrachte Dienstleistung mit Wertstellung auf dem Konto des Kunden stattfindet, wird der Preis aus dem Prozess "Berechnen" als Basis verwendet. Dabei greift der Prozess "Verrechnen" auf die Tabelle 2 zu, in welcher der im Verfahrensschritt 1 berechnete Preis und weitere für den Geschäftsfall relevante Informationen gespeichert wurden.

Der in dem Verfahrensschritt 1 berechnete Preis bleibt damit mindestens solange gespeichert, bis für die zugrundeliegende Dienstleistung ein Preis mit Wertstellung auf dem Konto verrechnet wurde, so dass beispielsweise anhand dieser Tabelle ermittelt werden kann, wie viele Geschäftsfälle und welcher Art diese waren. Zu dem Zeitpunkt, da die bereits erbrachten Dienstleistungen mit Wertstellung verrechnet werden sollen, liegen somit alle Informationen vor, um den tatsächlich in Wert zu stellenden Preis berechnen zu können. Dieser Preis wird erst zu dem späteren, vorgesehenen Zeitpunkt mit Wertstellung verrechnet, und das Konto des Kunden wird auch erst dann mit dem Preis für die erbrachte Dienstleistung belastet.

Zusätzlich kann dieser Preis in einem Archiv gespeichert werden. Das Archiv dient der Dokumentation der einzelnen Be- und Verrechnungen und muss dementsprechend hinsichtlich der Geschwindigkeit nur geringeren Anforderungen genügen.

Das für die periodische Verrechnung heranzuziehende Preismodell kann dabei von demjenigen Preismodell abweichen, welches für die Preisberechnung herangezogen wurde. So kann beispielsweise ein solches zweites Preismodell dasjenige sein, in welchem alle nur mit diesem Kunden vereinbarten Konditionen hinterlegt sind, wohingegen das für die Berechnung der Preishöhe bei Erbringung der Dienstleistung einfacher, beispielsweise ohne eine mengenabhängige Preiskondition, ausgeprägt ist. Beispielsweise kann für Kunden, mit denen eine mit zunehmender Menge pro Zeiteinheit fallende Preisstaffel und eine Verrechnung von Preisen am Ende eines Zeitabschnitts vereinbart ist, in dem Preismodell, welches für Preisberechnung heranzuziehen ist, der Maximalpreis oder ein generell höherer Preis hinterlegt sein, der über dem später tatsächlich be- und verrechneten liegt. Bei jeder Preisberechnung wird damit jeweils der maximale bzw. ein generell höherer Preis berechnet und gespeichert, ohne dass dieser Preis mit Wertstellung auf dem Konto des Kunden verrechnet wird. Auf diese Weise kann mit einem vergleichsweise einfachen Preismodell bei der ersten Preisberechnung Rechenaufwand eingespart werden. Die rechnerisch aufwändigere Verrechnung wird erst dann durchgeführt, wenn die berechneten Preise mit Wertstellung auf dem Kundenkonto belastet werden. So muss im Zuge einer mengenabhängigen Preisberechnung somit nur einmal die Anzahl der erbrachten Dienstleistungen ermittelt werden (Zeitpunkt der Verrechnung).

Insgesamt ist damit die Preisbe- und Verrechnung hinsichtlich des Rechenaufwandes optimiert, wobei gleichzeitig ein ― vorläufiger und möglicherweise zu korrigierender ― Preis für eine erbrachte Dienstleistung systemintern bereits berechnet wurde und für interne Zwecke, beispielsweise zur Abschätzung der noch ausstehenden Bankgebühren für bereits erbrachte Dienstleistungen, zur Verfügung steht.

Gegenüber dem Kunden sind grundsätzlich zwei Darstellungsformen von Preisen möglich. Darstellung A: Bruttodarstellung - der Preis aus dem Prozess "Berechnen" bildet die kalkulatorische Basis. Auf diesem Preis werden Reduktionen (z.B. Preisreduktion aufgrund von vorhandenen Vermögenswerten) vorgenommen und gegenüber dem Kunden auch visualisiert. Als Resultat entsteht der Nettopreis, der dem Kunden zum Zeitpunkt der Wertstellung auch effektiv auf dem Konto belastet wird. Darstellung B: Nettodarstellung - Gegenüber dem Kunden wird nur der Nettopreis visualisiert. Die Zwischenresultate vom Brutto- zum Nettopreis sind nur intern verfügbar.

Die Berechnung eines Preises zu dem späteren Zeitpunkt, an dem der Preis auf dem Konto des Kunden mit Wertstellung zu verrechnen ist, fällt häufig auf ein Ende eines Zeitabschnitts. Für viele Konten ist vereinbart, dass am Ende eines solchen Zeitabschnitts, beispielsweise am Ende eines Kalendermonats oder am Ende eines Quartals oder Jahresende, ein Kontoabschluss stattfindet. Mit einem solchen Abschluss wird für einen bestimmten Zeitpunkt, also das Ende des Zeitabschnitts der Saldo des Kontos ermittelt. Dazu gehört auch ein Preisabschluss, in welchem alle Preise zu berücksichtigen sind, mit denen die Bank ein Konto belasten kann. Um diesen Preisabschluss herbeiführen zu können, müssen dementsprechend die Preise für erbrachte Dienstleistungen der Höhe nach berechnet und für das Belastungskonto zusammengestellt werden.

Die Be- und Verrechnung eines Preises für erbrachte Dienstleistungen am Ende eines Zeitabschnitts wird in vorteilhafter Weise automatisch bei Erreichen des Endes des Zeitabschnitts gestartet. Der Start eines entsprechenden Prozesses, der sowohl die Preise be- als auch verrechnet, kann beispielsweise durch einen sogenannten Scheduler-Prozess 9 veranlasst werden. Derartige Scheduler-Prozesse 9 können so konfiguriert werden, dass sie bei Erreichen einer bestimmten Zeit oder bei Eintreten eines vordefinierten Ereignisses andere Prozesse starten und damit bestimmte, immer wiederkehrende Prozesse automatisch starten.

Die Be- und Verrechnung von Preisen kann jedoch vorteilhaft auch manuell gestartet werden. Durch das Starten der zugehörigen Be- und Verrechnungsprozesse mit zugehörigen Startparametern kann die Be- und Verrechnung von Preisen so gestartet werden, dass für ein bestimmtes Konto oder eine Gruppe von Konten ein Preisabschluss zu einem beliebigen Zeitpunkt, beispielsweise bei der Auflösung eines Kundenkontos, veranlasst werden kann.

Unabhängig davon, ob die Be- und Verrechnung von Preisen zur Herbeiführung eines Preisabschlusses automatisch oder manuell gestartet wird, kann die Be- und Verrechnung im sogenannten Batchbetrieb erfolgen. Dabei werden die zur Herbeiführung eines Preisabschlusses notwendigen Prozesse mit allen notwendigen Parametern und in der Reihenfolge gestartet, die für eine sequentielle Abarbeitung notwendig ist, ohne dass während eines Prozesslaufs weitere Eingaben notwendig sind. So werden vor dem Start der Prozesse die für die Prozessläufe notwendigen Parameter, beispielsweise die Konten und die zugehörigen Zeiträume, für die ein Preisabschluss herbeizuführen ist, vor dem Start des ersten Prozesses definiert, so dass die Prozesse von der ausführenden logischen Maschine möglichst günstig ausgeführt werden können.

Großen Einfluss auf die erreichbare Geschwindigkeit bei der Be- und Verrechnung von Preisen für die erbrachten Dienstleistungen haben auch die Preismodelle, in denen die Konditionen für die Preisbe- und Verrechnung für die Kunden festgelegt sind. In einem Preismodell ist damit zu definieren, für welche Leistungen und Produkte ein Preis zu berechnen ist, bei welchen Szenarien von Geschäftsfällen ein Preis zu be- und verrechnen ist, wie der Preis definiert nach welchem Verfahren dieser zu berechnen ist. Dabei soll jedes Preismodell so ausgebildet sein, dass kundenindividuelle Konditionen in einem Preismodell erfasst werden können. Schließlich muss in dem Preismodell festgelegt werden, wie die mit Wertstellung auf dem Konto eines Kunden verrechneten Preise diesem angezeigt werden sollen.

Gleichzeitig muss das Preismodell einheitlich sein, so dass es zentral abgelegt und verwaltet werden kann. Insbesondere für eine Bank, die üblicherweise mehrere Millionen Kunden mit jeweils mindestens einem Konto hat, und die jeweils pro Konto mehrere Geschäftsfälle verarbeiten muss, besteht die Notwendigkeit ein Preismodell zu nutzen, welches die notwendige Flexibilität und Effizienz bietet.

Figur 2 zeigt das der Preisberechnung zugrunde liegende generische Preismodell 10. Ausgehend von einem Preis 11, der für eine Leistung oder ein Produkt als Startpreis festgelegt ist und der als Ausgangspunkt für die weiteren Berechnungsschritte herangezogen wird, wird anschließend mindestens ein Modifikationsschritt 14 durchlaufen. Als Startpunkt für die weiteren Modifikationsschritte 14 dient dann der beim Durchlaufen des vorherigen Modifikationsschrittes 14 ermittelte Preis 11. Wie durch den Pfeil 12 angedeutet dient der in einem Modifikationsschritt 14 ermittelte Preis 11 als Startpunkt für die nächste Modifikation 14. In jedem dieser Modifikationsschritte 14 werden über eine 1 zu n Beziehung die jeweils notwendigen Modifikationen 14 und Parameter, also die preisbestimmenden Elemente, ermittelt. Diese können beispielsweise in den Tabellen des Repositorys gespeichert sein. Weiterhin kann in diesen Modifikationen 14 auch festgelegt sein, zu welchem Zeitpunkt ein Preis für eine Leistung mit Wertstellung auf dem zugehörigen Konto zu verrechnen ist.

Das generische Preismodell lässt jedoch auch die Definition eines Fixpreises zu, so dass der Startpreis nicht durch eine Modifikation 14 verändert wird und damit sofort der Endpreis ist. Beispielsweise kann so für die Bereitstellung einer Kreditkarte zu einem Konto ein unveränderlicher Festpreis definiert werden.

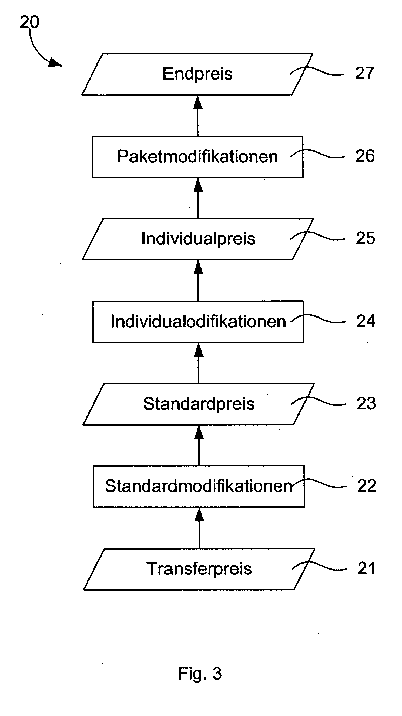

Figur 3 zeigt eine konkretere Ausgestaltung eines Preismodells 20, in welchem über vier Preisebenen, die durch drei Modifikationsschritte miteinander verknüpft sind, der letztlich mit Wertstellung auf dem Konto zu verrechnende Endpreis berechnet wird. In einem Modifikationsschritt kann dabei der Preis in Abhängigkeit von der Konfiguration der einzelnen Modifikationen verringert oder erhöht werden, wobei in einem Modifikationsschritt eine Kategorie von Kriterien ausgewertet wird. Solche Kategorien können beispielsweise Standardmodifikationen 22, oder Individualmodifikationen 24 oder Paketmodifikationen 26 sein. In diesem Modell erfolgt die Bestimmung des Preises "von unten nach oben", so dass der Transferpreis 21 der Startpunkt für die nachfolgende Preisberechnung ist. Der Endpreis 27 ist dementsprechend das Ende der Preisberechnung.

Die erste Preisebene ist der sogenannte Transferpreis 21, der als Startpreis für die Berechnung für eine Dienstleistung oder ein Produkt festgelegt ist. Dieser Transferpreis dient zur Abdeckung der beim Unternehmen tatsächlich für die Dienstleistung oder das Produkt entstandenen Kosten (Sicht des Providers - Kosten für die Herstellung).

In einem ersten Modifikationsschritt wird über die Standardmodifikationen 22 ein sogenannter Standardpreis 23 berechnet. Eine Standardmodifikation 22 ist beispielsweise der Aufschlag der Gewinnmarge der Bank auf den Transferpreis 21.

In dem nachfolgenden Modifikationsschritt wird ausgehend von dem Standardpreis 23 über die Auswertung von Individualmodifikationen 24 ein sogenannter Individualpreis 25 ermittelt. Diese Individualmodifikationen 24 sind in diesem Ausführungsbeispiel Preisnachlässe aufgrund der Zugehörigkeit eines Kontoinhabers zu einem vordefinierten Kundensegment. Solche Kundensegmente können beispielsweise Studenten oder Rentner sein, denen ein Preisnachlass für bestimmte Leistungen oder Produkte eingeräumt wird. Weitere Individualmodifikationen, die für alle Transaktionen gelten, können für einzelne Personen konfiguriert werden. Diese gelten damit nur für einen Kontoinhaber, nicht jedoch für eine vordefinierte Gruppe von Kontoinhabern. Weiterhin kann eine Preismodifikation nur für eine einzelne Transaktion gewährt werden, die beispielsweise von einem Kundenbetreuer für einen Kunden für eine einzelne Transaktion eingetragen wird. Der Kundenbetreuer kann so die für alle Kunden geltenden Kriterien für einen Kunden oder nur für eine Transaktion übersteuern. Dabei kann in dem Preismodell jedoch festgelegt sein, dass ein solches Übersteuern durch einen Kundenbetreuer nur in den im Preismodell 20 für solche Einzelfälle vorgegebene Fälle vordefinierten Grenzen stattfinden kann, so dass auch in diesen Fällen die maximal mögliche Modifikation durch das Preismodell 20 vordefiniert ist.

Ausgehend von dem so berechneten Individualpreis 25 werden dann in dem hier letzten Modifikationsschritt sogenannte Paketmodifikationen 26 ausgewertet. Der so ermittelte Preis ist dann der Endpreis 27, welcher dann mit Wertstellung auf dem Kundenkonto verrechnet wird. Derartige Paketmodifikationen 26 sind Veränderungen eines Einzelpreises dadurch, dass der Kunde, also üblicherweise der Kontoinhaber, mehrere und möglicherweise verschiedenartige Leistungen in einem Paket gekauft hat. In diesem Modifikationsschritt sind dabei auch Erhöhungen gegenüber dem zuvor berechneten Individualpreis 25 möglich, die durch ein Nichterfüllen von vereinbarten Konditionen begründet sind.

Das hier in Figur 3 dargestellte Preismodell ist als ein mögliches Beispiel anzusehen, welches zur Bestimmung der Höhe eines Preises herangezogen wird, der auch verrechnet wird, also mit Wertstellung auf einem Kundenkonto verbucht wird. Einfachere Preismodelle mit weniger Modifikationsebenen sind beispielsweise für die Berechnung eines Preises denkbar, die sofort bei der Erbringung der Leistung, also bei der Abwicklung des Geschäftsfalls, berechnet, jedoch nicht verrechnet werden und damit wie oben beschrieben nur bankinternen Zwecken dienen (1. Preisstellung, dient als Bruttopreis für den Prozess Verrechnung).

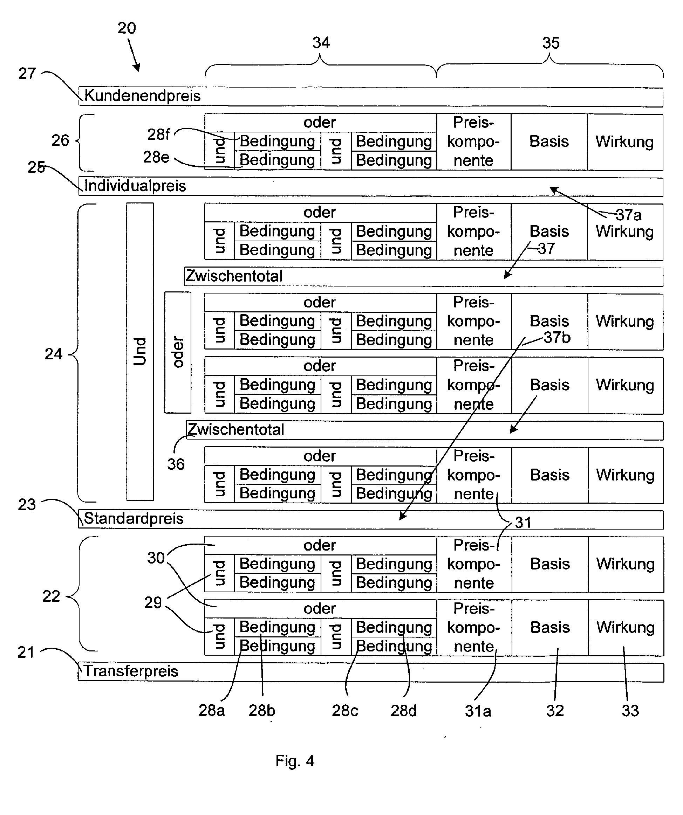

Figur 4 zeigt eine verfeinerte Darstellung eines Preismodells 20, in welchem ausgehend von einem Transferpreis 21 in dem ersten Modifikationsschritt Standardmodifikationen 22 ausgewertet werden und so ein Standardpreis 23 berechnet wird. Ausgehend von diesem Standardpreis 23 wird über die Auswertung von Individualmodifikationen 24 ein Individualpreis 25 berechnet, welcher als Ausgangsgröße für die im letzten Modifikationsschritt auszuwertenden Paketmodifikationen 26 dient, so dass letztlich der Kundenendpreis 27 berechnet wird. Die vier Preisebenen Transferpreis 21 bis Kundenendpreis 27 dienen hierbei wieder als bankfachliche Synchronisationslevel, die in obiger Reihenfolge schrittweise und "von unten nach oben" erreicht werden.

Die für einen Kunden geltenden Konditionen, welche für den Kunden aufgrund allgemein konfigurierter oder individueller vertraglicher Vereinbarungen gelten, sind in dieser Darstellung als Bedingungen 28 dargestellt, die miteinander logisch per "und" 29 oder "oder" 30 verknüpft sind. Aus Gründen der Übersichtlichkeit sind in der Figur nicht jeweils alle Blöcke eines Typs mit Bezugszeichen gekennzeichnet.

Ausgehend vom Transferpreis 21 als Startpunkt wird ein Preis durch Auswertung der zwischen den Synchronisationsleveln abzuprüfenden Bedingungen 28 ermittelt. Trifft eine Bedingung 28 zu, so bewirkt dies eine Preiskomponente oder Modifikation 31, für die eine Basis 32 mit einer Wirkung 33 in dem Preismodell 20 verknüpft ist.

Jeder der Berechnungsabschnitte 22, 24 oder 26 zwischen zwei Synchronisationsleveln 21, 23, 25 und 27 kann mehrere jeweils und miteinander mit einem logischem "und" und/oder "oder" verknüpfte Bedingungen aufweisen. So weist beispielsweise der Berechnungsabschnitt vom Transferpreis 21 zum Standardpreis 22 zwei Abschnitte von jeweils vier miteinander verknüpften Bedingungen 28 auf, die auf jeweils gleiche Weise miteinander verbunden sind. Die Bedingungen 28a und 28b sowie 28c und 28d des unteren Abschnitts sind dabei jeweils über ein logisches "und" miteinander zu Paaren verbunden. Diese Paare wiederum sind über ein logisches "oder" miteinander verknüpft. Die zu diesem Abschnitt hinterlegte Preiskomponente 31 a greift also nur dann, wenn jeweils die Bedingungen 28a und 28b oder jeweils 28c und 28d zutreffen, wobei die logische "oder" Verknüpfung kein exklusives (xor) ist. Die hier zwischen den Synchronisationsleveln Transferpreis 21 und Standardpreis 23 vorgesehenen Bedingungen werden "von unten nach oben" durchlaufen, so dass zuerst der untere Abschnitt der Bedingungen 28a - 28d und anschließend die Bedingungen des darüber liegenden Abschnitts ausgewertet werden.

Die Abarbeitung der miteinander verknüpften, bankfachlichen Bedingungen 28, die auch als preistreibende Bedingungen 34 verstanden werden können, findet dabei nach den Regeln 35 für den Preisaufbau statt, in denen die Reihenfolge für die Prüfung der Bedingungen 28 abweichend von der Abarbeitung von "unten nach oben" definiert und die in einem sogenannten Abwicklungsmodell abgelegt sind. Diese Regeln 35 für den Preisaufbau ermöglichen dabei beispielsweise Sprünge 37, die durch die Pfeile angedeutet sind. Durch diese Sprünge 37 kann die grundsätzlich geltende sequentielle Abarbeitung der Bedingungen 28 "von unten nach oben" in der Weise verändert werden, dass nachfolgende Bedingungen 28 übersprungen und damit nicht abgeprüft werden. Diese Sprünge 37 enden dabei üblicherweise auf einem der Synchronisationslevel oder auf einem frei definierten Zwischentotal-Level 36.

Bei der Ermittlung eines Individualpreises 25 kann beispielsweise über die Bedingung 28e geprüft werden, ob der Kontoinhaber zu einer bestimmten Personengruppe, beispielsweise zur Kundengruppe der Studenten gehört. Über die Bedingung 28f kann weiterhin geprüft werden, ob der Kontoinhaber unterhalb einer bestimmten Altersgrenze liegt. Treffen beide Bedingungen 28e und 28f, die mit einem logischen "und" miteinander verknüpft sind, zu, so wird der Individualpreis 25 zwingend durch den Sprung 37a festgelegt, wobei auf das darunter liegende Zwischentotal-Level als Basis 32 zugegriffen wird. Die Wirkung des Zutreffens dieser beiden Bedingungen 28e und 28f bewirkt damit, dass das Resultat zwingend zum Individualpreis 25 festgelegt wird, ohne dass weitere Bedingungen 28 in diesem Modifikationsschritt geprüft werden und dementsprechend keine weitere Addition von Wirkungen "von unten nach oben" stattfindet. Dies gilt auch, wenn oberhalb dieses Abschnitts von Bedingungen 28e, 28f noch weitere Abschnitte von Bedingungen 28 angeordnet wären.

In den Regeln 35 für den Preisaufbau kann für solche Sprünge 37 auch festgelegt sein, dass für die Preisermittlung eine Basis 32 heranzuziehen ist, die von dem bisher ermittelten Zwischenresultat abweicht. So kann in dem Abwicklungsmodell für einen Sprung 37b beispielsweise definiert sein, dass als Basis 32 für die Ermittlung des nächsten Preis-Zwischenresultats nicht auf das bisher durch Auswertung mehrerer Bedingungen 28 und deren zugehöriger Verknüpfungen ermittelte Preis-Zwischenresultat, sondern wieder auf den Standardpreis 23 zuzugreifen ist.

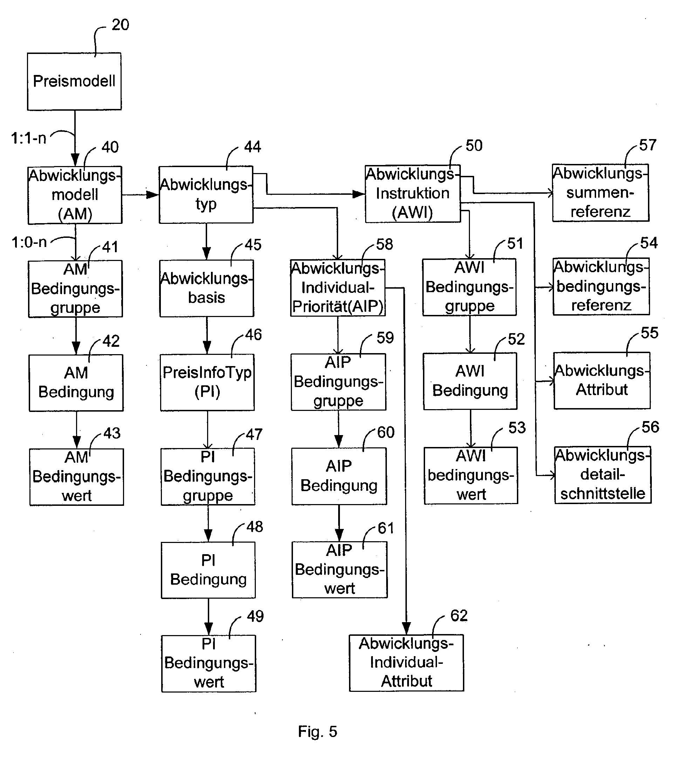

Figur 5 zeigt ein vereinfachtes Blockschaltbild eines Abwicklungsmodells 40, welches Bestandteil des Preismodells 20 ist und in dem die eigentliche Logik des Preisaufbaus definiert ist. In dem Abwicklungsmodell 40 werden die einzelnen Preisbestandteile (Preisdefinitionen) untereinander und zwischen deren Anwendungsbedingungen gesteuert. In diesem kann auch für jeden Preisbestandteil oder für jedes Zwischenresultat bei der Ermittlung eines Preises definiert werden, wie und wo es weiter verwendet wird.

Innerhalb eines Preismodells 20 muss mindestens eines, es können aber auch mehrere Abwicklungsmodelle 40 definiert sein, die auch gleichzeitig gültig sein können. Zwischen einem Preismodell 20 und einem Abwicklungsmodell 40 ergibt sich damit eine 1:1-n Beziehung ergibt. Mit den unterschiedlichen Abwicklungsmodellen 40 lassen sich beispielsweise abweichende Abwicklungsmodelle für bestimmte Kundengruppen oder für bestimmte Zeitpunkte definieren.

Zur Definition der Gültigkeit und der im Einzelfall zu prüfenden Anwendbarkeit eines Abwicklungsmodells 40 kann jeweils eine Bedingungsgruppe 41 nach einer 1:0-n Beziehung definiert sein, für die wiederum nach einer 1:1-n Beziehung einzelne Bedingungen 42 definiert sind und für die schließlich einzelne Bedingungswerte nach einer 1:1-n Beziehung definiert sind.

Wie bereits beschrieben kann sich die vollständige Be- und Verrechnung eines Preises auf mehrere Zeitpunkte verteilen. So kann beispielsweise die Preisberechnung eines einzelnen Geschäftsfalles zum Zeitpunkt der Abarbeitung, also im Rahmen der Leistungserbringung, stattfinden, wohingegen die Verrechnung, die wiederum eine neue Berechnung des Preises umfassen kann, zu einem späteren Zeitpunkt stattfindet, beispielsweise wenn für das zugehörige Konto ein Preisabschluss am Ende eines Zeitabschnitts, beispielsweise eines Monats oder Quartals durchgeführt wird. Preismodifikationen können dabei sowohl zum Berechnungszeitpunkt, beispielsweise durch die Auswertung von Individualkonditionen bzw. - Bedingungen, als auch zum Zeitpunkt der Verrechnung, beispielsweise durch die Bedingungen für Mengenrabatte, die Preisberechnung beeinflussen. Diese Abwicklungsinstruktionen für die beiden Abwicklungszeitpunkte werden in den Abwicklungstypen definiert, so dass für ein Abwicklungsmodell ein oder mehrere (1:1-n Beziehung) Abwicklungstypen 44 definiert sind. Solche voneinander abweichende Abwicklungstypen können beispielsweise die Abwicklungstypen "Berechnen" und "Verrechnen" sein.

Für jeden Abwicklungstypen 44 ist dabei mindestens eine Abwicklungsbasis 45 definiert. Als Abwicklungsbasis 45 für den Abwicklungstypen "Berechnen" können dabei die Geschäftsfälle definiert sein, für die ein Preis der Höhe nach zu berechnen ist, für den Abwicklungstyp "Verrechnen" können die für die Geschäftsfälle bereits durchgeführten Berechnungen als Abwicklungsbasis 45 definiert sein.

Zu jeder so definierten Abwicklungsbasis 45 sind für die weitere Verarbeitung sogenannte Preisinfotypen 46 definiert, die festlegen, unter welcher Bezeichnung ein Berechnungsresultat abgelegt wird. Für diese Preisinfotypen sind wiederum sogenannte Preisinfobedingungsgruppen 47 definiert, für die jeweils wieder ein oder mehrere Preisinfobedingungen 48 mit zugehörigen Preisinfowerten 49 definiert sind.

Weiterhin sind für jeden Abwicklungstypen 44 ein oder mehrere Abwicklungsinstruktionen 50 definiert, die jeweils bei der Preisberechnung einen Preisbestandteil oder ein für die weitere Preisberechnung notwendiges Zwischenresultat liefern. Ebenso wie für das Abwicklungsmodell 40 selbst können hier für eine Abwicklungsinstruktion 50 eine oder mehrere Bedingungsgruppen 51 mit jeweils zugehörigen Bedingungen 52 und Bedingungswerten 53 definiert sein. Unterliegt die Ausführung einer Abwicklungsinstruktion 50 einer einzelnen oder einer Gruppe anderer Abwicklungsinstruktionen 50, so kann dies in einer Abwicklungsbedingungsreferenz 54 definiert sein. Eine solche Definition kann beispielsweise festlegen, dass eine bestimmte Abwicklungsinstruktion 50 nicht ausgeführt werden darf, wenn eine andere vorbestimmte Abwicklungsinstruktion 50 erfolgreich ausgeführt wurde. Für eine Abwicklungsinstruktion 50 können in weiteren Tabellen noch zur Ausführung notwendige weitere Attribute 55 und die Schnittstelle 56 definiert sein, an die das ermittelte Ergebnis geliefert werden soll. Schließlich ist in der Abwicklungssummenreferenz 57 definiert, mit welchen Resultaten weiterer Abwicklungsinstruktionen 50 das in dieser ermittelte Resultat aufzusummieren ist.

Zu jedem Abwicklungstyp 44 können weiterhin sogenannte Abwicklungsindividualprioritäten 58 definiert werden, in denen Prioritäten für die verwendeten Abwicklungstypen 44 definiert sind und in denen die mit einem Kunden individuell vereinbarten Sonderkonditionen bzw. Bedingungen festgehalten werden. Für solch eine Abwicklungsindividualpriorität 58 kann - analog zu den Abwicklungsinstruktionen 50 und dem Abwicklungsmodell 40 selbst - eine zugehörige Bedingungsgruppe 59 definiert werden, die auf eine oder mehrere Bedingungen 60 mit jeweilig hinterlegten Bedingungswerten 61 zugreift. Für eine solche Abwicklungsindividualpriorität 58 können schließlich noch Abwicklungsindividualattribute 62 definiert werden.

Das hier beschriebene Abwicklungsmodell ist damit aus klar definierten Elementen aufgebaut, die in einer eindeutigen Beziehung zueinander stehen. Dieser Aufbau ist als Beispiel für die weiteren in dem gesamten Preismodell vorhandenen Module zu sehen.

So sind Preisdefinitionen nach dem oben beschriebenen Modell aufgebaut und weisen dazu Standardpreisdefinitionen, Standardmodifikationen für Kundengruppen und Definitionen für kundenindividuelle Modifikationen auf. Ebenso sind nach einem derartigen Aufbau Layoutdefinitionen in dem Preismodell hinterlegt, in den definiert ist welche Informationen in welcher Form einem Kunden wann anzuzeigen sind.

Das Preismodell sieht weiterhin vor, dass einzelne, in sich konsistente Module des Verfahrens und des Preismodells austauschbar sind. Diese können dementsprechend verändert, geprüft und zu einem vorbestimmten Zeitpunkt in die Produktion übernommen werden. Das Preismodell weist hierzu explizite Funktionen und Werkzeuge auf, die einen Zugriff derart erlauben, dass Module innerhalb des Preismodells kopiert, verändert und getestet werden können. Damit besteht die Möglichkeit, dass solche Module zunächst als Kopie erzeugt werden können, ohne dass diese Kopie in der permanent weiterlaufenden Datenverarbeitung Auswirkungen haben. Eine solche Kopie kann dann beliebig verändert und anschließend getestet werden, so wie es aus der Entwicklung von Computerprogrammen bekannt ist. Anschließend kann ein so verändertes oder vollständig neu gestaltetes Modul in die laufende Datenverarbeitung übernommen werden, ohne dass diese für die Inbetriebnahme eines solchen neuen Moduls unterbrochen werden muss.

Das hier beschriebene Verfahren mit dem zugehörigen Preismodell ist in vorteilhafter Weise auf einem Großrechner mit entsprechenden Vorrichtungen zur Ausführung der Prozesse realisiert. Das Verfahren selbst ist dabei in einem oder üblicherweise mehreren Modulen abgebildet, die als Prozesse auf dem Großrechner ausgeführt werden.

## Patentansprüche

1. Datenverarbeitungsverfahren zur zeitlich optimierten Berechnung und Verrechnung von Preisen für eine erbrachte Leistung, die für einen Kunden von einem Unternehmen erbracht wurde, nach einem Preismodell, mit mindestens den folgenden Verarbeitungsschritten:
(1) Berechnen des Preises für die jeweilige erbrachte Leistung anhand des für den Kunden gültigen Preismodells, wobei der Preis der Höhe nach bestimmt wird;
(2) Speichern des berechneten Preises;
(3) Prüfen anhand des Preismodells, ob die zu dem jeweiligen Geschäftsfall erbrachte Leistung dem Konto des Kunden sofort bei Ausführung des Geschäfts oder zu einem späteren Zeitpunkt mit Wertstellung zu verrechnen ist;
(4) sofortiges Verrechnen mit Wertstellung des berechneten Preises auf dem Konto des Kunden, falls der zu dem Geschäftsfall ermittelte Preis mit sofortiger Wertstellung bei Ausführung des Geschäfts zu verrechnen ist.

2. Datenverarbeitungsverfahren nach Anspruch 1, wobei der Preis, der zu dem späteren Zeitpunkt mit Wertstellung auf dem Konto zu verrechnen ist, zum Zeitpunkt der Wertstellung gegenüber dem im Schritt (1) berechneten Preis der Höhe nach angepaßt, insbesondere reduziert werden kann.

3. Datenverarbeitungsverfahren nach einem der vorstehenden Ansprüche, wobei der im Schritt (1) berechnete Preis zusammen mit den Daten der erbrachten Leistung, insbesondere Dienstleistung mindestens bis zur Berechnung des Preises zu dem späteren Zeitpunkt gespeichert wird.

4. Datenverarbeitungsverfahren gemäß Anspruch 2, wobei der Zeitpunkt der Verrechnung mit Wertstellung für den Kunden abhängig ist von der Art des Geschäftsfalls, welcher der erbrachten Leistung, insbesondere Dienstleistung zugrunde liegt.

5. Datenverarbeitungsverfahren nach einem der vorstehenden Ansprüche, wobei das für den späteren Zeitpunkt heranzuziehende Preismodell von demjenigen Preismodell abweicht, welches bei der Berechnung des Preises in Schritt (1) herangezogen wurde.

6. Datenverarbeitungsverfahren gemäß einem der vorstehenden Ansprüche, wobei die Preise für die erbrachten Leistungen, insbesondere Dienstleistungen dem Kunden frühestens zu dem Zeitpunkt angezeigt werden, an dem sie mit Wertstellung auf das Konto des Kunden gebucht werden.

7. Datenverarbeitungsverfahren gemäß einem der vorstehenden Ansprüche, wobei gleichzeitig mit der Verrechnung des berechneten Preises Informationen zu dem Geschäftsfall und dem dazu berechneten Preis in einem Datenarchiv gespeichert werden.

8. Datenverarbeitungsverfahren nach einem der vorstehenden Ansprüche, wobei die Berechung des Preises für eine erbrachte Dienstleistung zu dem späteren Zeitpunkt und die entsprechende Verrechnung des Preises auf dem Konto des Kunden an einem Zeitabschnittsende stattfindet.

9. Datenverarbeitungsverfahren nach Anspruch 7, wobei die Berechnung und die Verrechnung von Preisen kurz vor Erreichen des Zeitabschnittsendes automatisch angestoßen werden.

10. Datenverarbeitungsverfahren nach einem der vorstehenden Ansprüche 1 bis 8, wobei die Berechnung und Verrechnung von Preisen, die einem Kunden nicht sofort mit Wertstellung zu verrechnen sind, zu einem beliebigen Zeitpunkt manuell startbar ist.

11. Datenverarbeitungsverfahren nach einem der vorstehenden Ansprüche, wobei der in Verarbeitungsschritt (1) berechnete Preis über dem zu dem späteren Zeitpunkt ermittelten Preis liegt, sofern der Preis nicht sofort mit Wertstellung mit dem Konto des Kunden verrechnet wird.

12. Datenverarbeitungsverfahren nach einem der vorstehenden Ansprüche 9 oder 10, wobei die Berechnung und Verrechnung der Preise für alle in der Vergangenheit liegenden und dem Kunden noch nicht mit Wertstellung verrechneten Leistungen durchgeführt wird.

13. Datenverarbeitungsverfahren nach Anspruch 12, wobei die Be- und Verrechnung im Batchbetrieb durchgeführt wird.

14. Verfahren zur Berechnung der Höhe des Preises für eine Leistung, die von einem Unternehmen für einen Kunden erbracht wurde, wobei in einem ersten Schritt ein für die Leistung festgelegter Grundpreis herangezogen wird und dieser in mindestens einem weiteren Modifikationsschritt verändert wird, wobei die maximal mögliche Veränderung in jedem Modifikationsschritt vordefiniert ist.

15. Verfahren nach Anspruch 14, wobei in jedem Modifikationsschritt eine Kategorie von Kriterien verarbeitet wird.

16. Verfahren nach Anspruch 14, wobei der Grundpreis die Höhe der Selbstkosten des Unternehmens ist.

17. Verfahren nach einem der vorstehenden Ansprüche 14 bis 15, wobei die in einem Modifikationsschritt vorgesehene Veränderung von einer Eigenschaft des Kunden abhängig ist.

18. Verfahren nach Anspruch 15, wobei die in einem Modifikationsschritt vorgesehene Veränderungen von dem Sitz des Kunden oder dem Alter oder der Gesellschaftsform abhängig ist.

19. Verfahren nach einem der Ansprüche 14 bis 15, wobei die in einem Modifikationsschritt vorgesehene Veränderung von der Anzahl gleicher Dienstleistungen pro Zeiteinheit abhängig ist.

20. Verfahren nach Anspruch 19, wobei die Zeiteinheit ein Kalendermonat, ein Quartal oder ein Jahr ist.

21. Verfahren nach einem der Ansprüche 14 bis 15, wobei die in einem Modifikationsschritt vorgesehene Veränderung von der Inanspruchnahme einer anderen Dienstleistungsart abhängig ist.

22. Verfahren nach einem der vorstehenden Ansprüche 14 bis 15, wobei die in einem Modifikationsschritt vorgesehenen Veränderungen für einen Kunden manuell festlegbar sind.

23. Verfahren nach Anspruch 22, wobei die Veränderungen nur für eine Transaktion gelten.

24. Datenverarbeitungsvorrichtung, eingerichtet zur Ausführung des Datenverarbeitungsverfahrens nach einem der vorstehenden Ansprüche, wobei die Datenverarbeitungsvorrichtung mindestens zwei logische Maschinen aufweist, auf denen entweder die Berechnung oder die Verrechnung von Preisen für mindestens einen Kunden stattfindet.

25. Computerprogramm mit Programm-Code-Mitteln zur Durchführung der in einem der Ansprüche 1 bis 23 angegebenen Verfahrensschritte, wenn das Programm auf einem Computer ausgeführt wird.

26. Computerprogramm mit Programm-Code-Mitteln nach Anspruch 25, wobei die zur Berechnung und Verrechnung notwendigen Daten in einer Datenbank abgespeichert sind.

27. Computerprogramm mit Programm-Code-Mitteln nach einem der Ansprüche 25 bis 26, wobei das Computerprogramm auf einem computerlesbaren Speichermedium gespeichert ist.
